# EUROPEAN PATENT APPLICATION

(11) **EP 4 533 950 A1**
(43) Date of publication of application: **09.04.2025**
(21) Application number: 23815999.0
(22) Date of filing: 29.05.2023
(51) Int. Cl.: A01N 59/16, A01P 1/00

(54) **ANTIVIRAL COMPOSITION AND MEMBER HAVING SAID COMPOSITION AT SURFACE THEREOF**

(30) Priority: 30.05.2022 JP 2022087677
(71) Applicant: SHIN-ETSU CHEMICAL CO., LTD., Tokyo 1000005 (JP)
(72) Inventor: HINOUE Mikiya, Kamisu-shi, Ibaraki 314-0102 (JP); INOUE Tomohiro, Kamisu-shi, Ibaraki 314-0102 (JP); FURUDATE Manabu, Kamisu-shi, Ibaraki 314-0102 (JP)
(74) Representative: Angerhausen, Christoph
(86) International application number: PCT/JP2023/019872
(87) International publication number: WO 2023/234242

(57) **Abstract**

Provided is an antiviral composition that has a photocatalytic function, and exhibits high antiviral activities against non-enveloped viruses that have been so far difficult to inactivate using a silver compound in a dark place not exposed to the light. This antiviral composition contains two types of particles that are photocatalyst particles and silver nanoparticles having a protection agent adsorbed on the surfaces thereof and having a dispersed particle diameter of 1000 nm or less and a primary particle diameter of 500 nm or less. The antiviral activity value, based on JIS R1756:2020, of the composition in a dark place is greater than 0.3, and the antiviral activity value of the composition brought by irradiation with light based on JIS R1756:2020 is at least 0.3.

## Description

### Technical Field

The present invention relates to an antiviral composition containing photocatalyst particles and silver nanoparticles as active components and a member having the composition on a surface thereof, and the present invention specifically relates to a highly transparent antiviral composition that exhibits antiviral activities in a dark place and whose antiviral activities are further improved by irradiation with light, and a member having the composition on a surface thereof.

### Background Art

In recent years, consumers are becoming more likely to pursue hygienic living environments, leading to a rise in interest in daily necessities treated to maintain cleanliness, such as those treated with antiviral treatment.

Achieving the formation of a composition with antiviral activities on the surfaces of various components opens up a wide range of applications. Thus, there is a demand for technology that can impart these antiviral activities to members.

When a subject to which antiviral activities are to be imparted requires visibility such as in the case of an operation touch screen or when the article is a member of design excellence, it is desirable for the antiviral composition formed on the surface to have excellent transparency.

It is known that copper monoxide compounds such as cuprous oxide have antiviral activities (Patent Document 1). However, monovalent copper readily oxidizes into divalent copper in the presence of air or water, which means that the monovalent copper has an issue that its high antiviral activities cannot be maintained.

There have been many reports that silver exhibits a broad antibacterial spectrum. For example, Patent Document 2 discloses an antibacterial agent that leverages the antibacterial efficacy of silver ions. Meanwhile, fewer reports have in fact been reported on the antiviral activities of silver compared to reports on its antibacterial properties. In addition, silver is recognized to exhibit low antiviral activities against non-enveloped viruses (Non-Patent Document 1).

Patent document 3 reports antiviral efficacy of silver particles against influenza viruses. However, this document does not mention any antiviral efficacy against non-enveloped viruses, and there is no description on the effect of light irradiation.

Patent document 4 reports that metal particles containing silver particles and platinum particles exhibit antiviral activities against non-enveloped viruses. However, this document states that silver particles alone cannot inactivate some viruses such as adenoviruses. Furthermore, Patent Document 4 evaluates the antiviral activities of an antiviral agent dispersion liquid, but the document is silent on imparting antiviral activities to a member.

The antiviral activities of molybdenum oxide and zinc oxide have been reported (Patent Document 5 and Patent Document 6). However, these metal oxides tend to readily aggregate, and it is difficult to obtain a composition having a transparency that is required for practical use.

Photocatalytic materials are attracting attention because they can provide a wide range of effects for cleaning the surface of base materials, including antibacterial, antifungal, antiviral, and deodorizing properties through the photocatalytic reactions that occur when exposed to light such as sunlight or artificial lighting.

The photocatalytic reaction refers to a reaction caused by excited electrons and holes generated when a photocatalyst, as typified by titanium oxide, absorbs light. The excited electrons and holes generated on the titanium oxide surface by the photocatalytic reaction undergo an oxidation-reduction reaction with oxygen and water adsorbed on the titanium oxide surface and generate activated species. These activated species break down microorganisms, viruses, and sources of odors and dirt made of organic matters, thereby achieving the aforementioned cleaning effects on the surfaces of basic material. However, the photocatalytic reaction of titanium oxide-a typical photocatalyst-is triggered by irradiation with a light of ultraviolet region (wavelength of 10 to 420 nm), and therefore the effect thereof cannot in principle be obtained in a dark place not exposed to natural light or artificial lighting, or under white LED lighting or fluorescent lighting that contains virtually no light having the wavelengths of 420 nm or less. In addition, although research is being conducted on making titanium oxide responsive to visible light and on tungsten oxide, which has a wide range of utilizable light wavelengths, irradiation with light is still essential for the generation of excited electrons.

Meanwhile, it is known that viruses adhering to an object maintain their infectivity for several hours to several days, and therefore products requiring a long-lasting performance such as antiviral products need materials that exhibit antiviral activities even in a dark place not exposed to light.

To address the aforementioned issues, studies have been conducted on photocatalytic materials that complement the functionality of photocatalyst by combining a catalyst with an antiviral agent not categorized as a photocatalyst (Patent Document 7 and Patent Document 8). It is suitable to use an inorganic antiviral agent because photocatalysts break down organic substances. Patent documents 7 and 8, for example, disclose techniques of making a photocatalyst have antiviral activities in a dark place by adding an antiviral agent, such as a silver compound or a copper compound, to the photocatalyst. In general, photocatalyst particles are dispersed in a solvent, and a film-forming component is mixed thereinto to form a paint, which is then applied to a base material for use as a photocatalyst. However, when metal components such as silver, copper, and zinc are added thereinto as mentioned above, they often cause problems in practical use. Specifically, it required a tremendous effort to subsequently disperse the particles into a solvent when metal ingredients are reacted with photocatalyst particulate powder as a method for supporting a metal, such as silver, copper, zinc or a compound thereof, thus making this method less preferable, while a method of adding a metal ingredient into a pre-dispersed photocatalyst particle solution disturbs the dispersion stability of photocatalyst particles and may triggers aggregation, risking a reduction in reactive surface area and, consequently, a deterioration in photocatalyst functionality, or leading to poor appearance of the applied area.

As shown, no photocatalyst thin film having sufficient antiviral activities and practical utility has ever been developed.

### PRIOR ART DOCUMENTS

### Patent documents

Patent document 1: JP-A-2014-231525
Patent document 2: JP-A-2010-202561
Patent document 3: WO-A-2008/147427
Patent document 4: WO-A-2020/162485
Patent document 5: JP-A-2019-182846
Patent document 6: WO-A-2013/073555
Patent document 7: WO-A-2016/042913
Patent document 8: JP-A-2018-111063

### Non Patent documents

Non-patent document 1: Y.Mori et al.; Nanoscale Research Letters 8,93, (2013)

### Summary of Invention

### Technical Problem

It is therefore an object of the present invention to provide an antiviral composition that has a photocatalytic function, and exhibits high antiviral activities against non-enveloped viruses that have so far been difficult to inactivate using a silver compound in a dark place not exposed to light, and to provide a member having the composition on a surface thereof.

### Solution to Problem

The inventors have conducted intensive studies to achieve the foregoing object and have consequently found that the following antiviral composition can achieve the foregoing object, thus completing the present invention.

That is, the present invention provides an antiviral composition and a member having the composition on a surface thereof as defined below.
<1> An antiviral composition comprising two types of particles of:
   i) photocatalyst particles; and
   ii) silver nanoparticles having a protection agent adsorbed on the surfaces of the nanoparticles and having a dispersed particle diameter of 1000 nm or less and a primary particle diameter of 500 nm or less,
   wherein the composition exhibits an antiviral activity value greater than 0.3 based on JIS R1756:2020 in a dark place, while the composition further enhances the antiviral activity value by 0.3 or more upon irradiation with light.
<2> The antiviral composition according to <1>, further comprising a binder.
<3> The antiviral composition according to <1> or <2>, wherein an amount by mass of the protection agent to the amount by mass of metal components in the silver nanoparticles is in a range from 0.001 to 10.
<4> A member comprising the antiviral composition according to <3> on a surface of the member.
<5> The antiviral composition according to <1> or <2>, further comprising an aqueous dispersion medium.

### Advantageous Effects of Invention

The present invention may provide an antiviral composition that demonstrate strong antiviral activities in a dark place and further enhances these antiviral activities by irradiation with light.

### Description of Embodiments

Described in detail below will be the antiviral composition of the present invention, which demonstrates strong antiviral activities in a dark place, and further enhances these antiviral activities when irradiated with light.

The term "antiviral" as used in this specification refers to a wording that encompasses a meaning of inactivating viruses (deactivation or decrease in viral infectivity). The antiviral property was evaluated based on criteria as described in the working examples using "antiviral activity value" calculated in accordance with JIS R1756: 2020 "Fine ceramics-Antiviral test method for visible light responsive photocatalytic material-Method using bacteriophage Qβ"

Viruses are broadly classified into enveloped (lipid bilayer) viruses and non-enveloped viruses based on their structure, and bacteriophage Qβ is a non-enveloped virus. The bacteriophage Qβ was used to evaluate antiviral activity of the present invention, considering that non-enveloped viruses are generally regarded as more resistant to disinfectants compared to enveloped viruses, and that a highly accurate and reproducible test method for the phage has been established.

The viruses against which the antiviral composition of the present invention exerts its antiviral activities may be enveloped or not enveloped. Examples of enveloped viruses include bacteriophage ϕ6, human influenza virus, avian influenza virus, rubella virus, herpes simplex virus, AIDS virus, dengue virus, mimivirus, rabies virus, Ebola virus, Lassa virus, mpox virus, SARS coronavirus, MERS coronavirus, Ebola virus, Fusellovirus, West Nile virus, and Zika virus. Examples of non-enveloped viruses include bacteriophage Qβ, adenovirus, norovirus, feline calicivirus, rotavirus, sapovirus, poliovirus, astrovirus, enterovirus, human papillomavirus, hepatitis E virus, and tobacco mosaic virus.

### [Antiviral Composition]

The antiviral composition of the present invention contains two types of particles of i) photocatalyst particles; and ii) silver nanoparticles having a protection agent adsorbed on the surfaces thereof and having a dispersed particle diameter of 1000 nm or less and a primary particle diameter of 500 nm or less.

### <Photocatalyst Particle>

As the photocatalyst particles contained in the antiviral composition of the present invention, there may be used various types of particles including titanium oxide based particles, tungsten oxide based particles, zinc oxide based particles, and niobium oxide based particles, all of which is now available on the market as well as crystalline fine particles of metal oxide crystal of n-type semiconductor. For example, there may be used, for example, anatase-type titanium dioxide (TiO₂), rutile-type titanium dioxide (TiO₂), tungsten trioxide (WO₃), zinc oxide (ZnO), Ga-doped zinc oxide (GZO), and niobium oxide (Nb₂O₅). Of these, anatase-type titanium dioxide (TiO₂), rutile-type titanium dioxide (TiO₂), and tungsten trioxide (WO₃) that are readily available may be suitable used. In addition, those having a high visible light activity may be used, and examples of which include rutile-type titanium oxide supporting platinum, rutile-type titanium oxide supporting iron, rutile-type titanium oxide supporting copper, rutile-type titanium oxide supporting copper hydroxide, anatase-type titanium oxide supporting gold, tungsten trioxide supporting platinum and the like.

Furthermore, it is preferred that photocatalyst particles having a microscopic primary particle diameter, or a primary particle diameter of 500 nm or less, more preferably in a range of 1 to 100 nm, and even more preferably of 1 to 50 nm be suitably employed. Particles having a primary particle diameter greater than 100 nm may decrease transparency of the composition or decrease dispersion stability in a dispersion liquid when the composition is made into the dispersion liquid. The term "primary particle diameter" as used herein refers to, unless otherwise specifically stated, an arithmetic mean value of the projected area equivalent circle diameter (Heywood diameter) of approximately 1,000 non-overlapping particles randomly selected from multiple particle images taken using, for example, a transmission electron microscope (e.g., H-9500 manufactured by Hitachi High-Technologies Corporation).

### <Silver Nanoparticle>

The silver nanoparticle contained in the antiviral composition of the present invention may contain at least silver and optionally a further component. Examples of such non-silver component include, but are not particularly limited to, one kind or a mixture or alloy of two or more kind selected from copper, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, thorium. Of these. it is preferred that the non-silver component contained in the silver nanoparticles be a non-silver metal component and it is more preferred that the component be iron, palladium, gold, platinum, copper, zinc, tin, molybdenum, titanium, or tungsten.

When the silver nanoparticles contain a non-silver metal component, the amount thereof is preferably 0.01 to 49% by mass, more preferably 0.1 to 40% by mass, and even more preferably 1 to 30% by mass based on the mass of the metal components in the silver nanoparticles. This is because a content of the non-silver metal component exceeding 50% by mass of the metal components in the silver nanoparticles may fail to exhibit sufficient antiviral activities. Additionally, a content of the non-silver metal component less than 0.01% by mass hardly influences the properties of the silver nanoparticles, such as antiviral activities or dispersion stability.

The present invention provides an antiviral composition containing silver nanoparticles on which a protective agent is adsorbed. The protective agent as used herein refers to, for example, a surfactant that has the property of being accumulated at an interface between two phases, a compound having a low molecular weight metal ligand that has a strong interaction with metal particles, such as an alkylthiol, an amine group, a silane group, or a phosphine group, or a polymer that has a large number of adsorption segments and tends to be easily adsorbed to the particle surface. These substances are adsorbed or coordinated to the surface of silver nanoparticles to thereby make the silver nanoparticles have electrostatic or steric repulsion between themselves, thereby suppressing the coalescence and aggregation of the silver nanoparticles to keep the dispersed state. Specific examples of the protective agent include surfactants such as anionic surfactants, cationic surfactants, nonionic surfactants and amphoteric surfactants; water-soluble polymer compounds such as polyvinylpyrrolidone, polyvinyl alcohol, polyethylenimine, polyethylene oxide, polyacrylic acid, and methylcellulose; amino acids such as cysteine, arginine, asparagine, and aspartic acid; aliphatic amine compounds such as ethanolamine, diethanolamine, triethanolamine, and propanolamine; polyphenols such as tannic acid, gallocatechin, gallic acid, pyrogallol, 4-benzylpyrogallol (2,3,4-trihydroxydiphenylmethane), and ellagitannin; primary amine compounds such as butylamine, dibutylamine, hexylamine, cyclohexylamine, heptylamine, 3-butoxypropylamine, octylamine, nonylamine, decylamine, dodecylamine, hexadecylamine, oleylamine, and octadecylamine; diamine compounds such as N,N-dimethylethylenediamine, and N,N-diethylethylenediamine; and carboxylic acid compounds such as oleic acid, citric acid, and their salts. The protective agent may be any one of the above-listed compounds or two or more of them may be used in combination.

The mass ratio of the protective agent adsorbed on the surfaces of silver nanoparticles relative to the metal components in the silver nanoparticles is preferably in a range from 0.001 to 10, more preferably in a range from 0.005 to 5, and even more preferably in a range from 0.01 to 1.

The silver nanoparticles have a dispersed particle diameter of 1000 nm or less, preferably of 1 to 1000 nm, even more preferably of 1 to 200 nm, and still more preferably of 1 to 70 nm when the diameter is a 50% cumulative distribution diameter (D50) based on the number of particles measured by dynamic light scattering using a laser beam. Regarding the lower limit of the dispersed particle diameter, although the used particles may theoretically have the smallest particle diameter possible capable of exhibiting antiviral activity, it is preferred in practice that the diameter be 1 nm or more. Further, the particles having a dispersed particle diameter exceeding 1000 nm are not preferred because the antiviral composition made from such particles not only deteriorates its haze value but also may decrease the antiviral activity. As a device for measuring the dispersed particle diameter, ELSZ-2000ZS (manufactured by Otsuka Electronics Co., Ltd.), Nanotrac UPA-EX150 (manufactured by Nikkiso Co., Ltd.), LA-910 (manufactured by Horiba, Ltd.) can be used.

The silver nanoparticles have a primary particle diameter of 500 nm or less, preferably of 1 to 500 nm, more preferably of 1 to 100 nm, and even more preferably of 1 to 50 nm. Regarding the lower limit of the primary particle diameter, although the used particles may theoretically have the smallest particle diameter possible capable of exhibiting antiviral activity, it is preferred in practice that the diameter be 1 nm or more. Further, the particles having a primary particle diameter exceeding 500 nm are not preferred because the antiviral composition made from such particles not only deteriorates its haze value but also may decrease the antiviral activity.

It is preferred that the ratio by mass between the photocatalyst particles and the silver nanoparticles in the antiviral composition be 1:0.0001 to 1:0.1, more preferably 1:0.0005 to 1:0.05. Further, the antiviral composition may contain not only the photocatalyst particles and the silver nanoparticles but also an additive such as a binder or a surfactant so long as the advantageous effects of the present invention are not impaired.

### <Binder>

The antiviral composition of the present invention may further contain a binder. The antiviral composition of the present invention may contain the binder to further enhance an antiviral efficacy that is brought by light irradiation. Examples of the binder include metal compound-based binders containing, for example, silicon, aluminum, titanium, or zirconium; and organic resin-based binders containing, for example, a fluororesin, an acrylic resin or a urethane resin. Of these, it is preferred that a silicon compound-based binder be used for obtaining an excellent composition having enhanced antiviral activity. The silicon compound-based binder as used herein refers to a colloid dispersion liquid, solution or emulsion of a solid or liquid silicon compound that is contained in an aqueous dispersion medium, and specific examples of which include a colloidal silica (preferable particle diameter is 1 to 150 nm); a solutions of silicate salt such as silicate; a silane or siloxane hydrolysate emulsion; a silicone resin emulsion; and an emulsion of copolymers of silicone resin and another resin, such as a silicone-acrylic resin copolymer and a silicone-urethane resin copolymer.

It is preferred that the antiviral composition contain the photocatalyst particles in an amount of 20 to 99.99% by mass, more preferably of 30 to 99.95% by mass. It is also preferred that the antiviral composition contain the silver nanoparticles in an amount of 0.01 to 20% by mass, more preferably of 0.05 to 10% by mass. It is also preferred that the antiviral composition contain the binder in an amount of 0 to 79.99% by mass, more preferably of 10 to 69.99% by mass. Further, the antiviral composition may contain not only the photocatalyst particles, the silver nanoparticles, and the binding but also an additive such as a surfactant so long as the advantageous effects of the present invention are not impaired.

An embodiment of the antiviral composition of the present invention includes an antiviral composition (dispersion liquid) further containing an aqueous dispersion medium.

An aqueous solvent is normally used in the aqueous dispersion medium, and it is preferable to use water, a water-soluble organic solvent miscible with water, or a mixed solvent of water and a water-soluble organic solvent. Preferable examples of water include a deionized water, a distilled water, and a pure water. Further, examples of the water-soluble organic solvent include alcohols such as methanol, ethanol, n-propanol, 2-propanol, n-butanol, 2-butanol, tert-butanol, ethylene glycol, diethylene glycol and polyethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether and propylene glycol-n-propyl ether; ketones such as acetone and methyl ethyl ketone; water-soluble nitrogen-containing compounds such as 2-pyrrolidone and N-methylpyrrolidone; and ethyl acetate. Any one of them may be used, or two or more of them may be used in combination.

There is no particular restriction on the concentration of the silver nanoparticles in the dispersion liquid, but it is preferred that the silver component be contained therein at a concentration of 0.0001 to 10% by mass, more preferably of 0.0005 to 5% by mass, even more preferably of 0.001 to 1% by mass as the particles contained therein at a lower concentration generally tend to have more favorable dispersibility. It is also preferred that the silver nanoparticles be contained therein at a concentration of 0.0001% by mass or more because this concentration allows the particles to exhibit antiviral activity in a dark place.

There is no particular restriction on the concentration of the photocatalyst particles in the dispersion liquid, but it is preferred that the photocatalyst component be contained therein at a concentration of 0.0001 to 80% by mass, more preferably of 0.001 to 50% by mass, and even more preferably of 0.01 to 20% by mass as the particles contained therein at a lower concentration generally tend to have more favorable dispersibility. It is also preferred that the photocatalyst particles be contained therein at a concentration of 0.0001% by mass or more because this concentration allows the photocatalyst particles to provide virus inactivating effects.

There is no particular restriction on the concentration of the binder in the dispersion liquid, but it is preferred that the concentration be 0.0001 to 90% by mass, more preferably of 0.001 to 50% by mass, and even more preferably of 0.01 to 20% by mass as the binder contained therein at a lower concentration generally tend to have more favorable dispersibility. It is also preferred that the binder be contained therein at a concentration of 0.0001% by mass or more because this concentration further enhances the efficacy brought by light irradiation and allows the liquid to be easily applied to the surface of various types of members.

The antiviral composition of the present invention demonstrates strong antiviral activities in a dark place and further enhances these antiviral activities upon irradiation with light, where the composition exhibits an antiviral activity value greater than 0.3 based on JIS R1756:2020 in a dark place, while the composition exhibits an antiviral value brought by irradiation with light of 0.3 or more based on JIS R1756:2020.

Particularly, the antiviral composition containing a binder exhibits an antiviral activity value that is significantly enhanced by irradiation with light, where the composition exhibits an antiviral value brought by the light irradiation of preferably 0.5 or more, more preferably by 1.0 or more, and even more preferably by 1.5 or more based on JIS R1756:2020 upon irradiation with light.

The light for enhancing the antiviral activity may be any light that contains a wavelength absorbable by the photocatalyst particles and the silver nanoparticles, and the specific wavelength thereof is 200 to 800 nm, more preferably 300 to 700 nm. The light less than 200 nm potentially exhibits antiviral activity in the light itself, and is not practical, while the light exceeding 800 nm may make it difficult to enhance the antiviral activity using light irradiation and is unfavorable. Any light source may be used so long as it contains light of these wavelengths, and examples of which include a fluorescent lamp, an LED, an incandescent lamp, a low-pressure sodium lamp, a high-pressure sodium lamp, a metal halide lamp, a mercury lamp, a xenon lamp, an organic electroluminescence (EL), a krypton lamp, a halogen lamp, and sunlight. These may be used alone or in combination of two or more kinds. The light irradiation illuminance is 5 to 500,000 lx, more preferably 10 to 200,000 lx. A light irradiation illuminance of less than 5 lx may make it difficult to check light irradiation efficacy, while the light irradiation illuminance greater than 500,000 lx is an unrealistic condition in a practical environment. As a device for measuring illuminance, for example, LX-105 (manufactured by CUSTOM corporation.), CHF-LT1 (manufactured by SANWA SUPPLY INC.), T-10A (manufactured by Konica Minolta Japan, Inc.) may be used. Although there is no particular restriction on the irradiation time, the irradiation time is preferably about 1 minute to 48 hours due to the nature of the antiviral activity measurement test.

### [Manufacturing Method]

The method for manufacturing the antiviral composition of the present invention, particularly for manufacturing the dispersion liquid may include, for example, the following steps (1) to (6) of:
Step (1) of dispersing photocatalyst particles in an aqueous dispersion medium to prepare a photocatalyst particle dispersion liquid;
Step (2) of producing a solution containing a raw material silver compound and a solution in which a reducing agent and a protective agent are dissolved in an aqueous dispersion medium;
Step (3) of mixing the solution containing the raw material silver compound and the solution containing the reducing and protective agents produced in the step (2) to produce a silver nanoparticle dispersion liquid;
Step (4) of washing the silver nanoparticle dispersion liquid produced in the step (3) with an aqueous dispersion medium using membrane filtration;
Step (5) of mixing the resultant photocatalyst particle dispersion liquid prepared in the step (1) and the resultant silver nanoparticle dispersion liquid obtained in the step (4); and
Step (6) of mixing a binder into the resultant dispersion liquid of step (5).

Each of the steps will be explained in detail hereinunder.

### <Preparation of Photocatalyst Particle Dispersion Liquid>

### • Step (1):

In Step (1), photocatalyst particles are dispersed into an aqueous dispersion medium to produce a photocatalyst particle dispersion liquid. As the photocatalyst particles, there may be used various types of particles including, for example, titanium oxide based particles, tungsten oxide based particles, zinc oxide based particles, and niobium oxide based particles as well as crystalline fine particles of metal oxide crystal of n-type semiconductor, and specific examples thereof include the above-listed types of photocatalyst particles. One type of the photocatalyst particles may be used alone or two or more types of them may be used in combination. While there are no particular restrictions on a method for producing photocatalyst particles, there may be listed, for example, a gas phase method (e.g. CVD method, PVD method), a liquid phase method (e.g. hydrothermal method, sol-gel process) and a solid phase method (e.g. high-temperature firing). Alternatively, the photocatalyst particles may be subjected to microparticulation or classification with respect to particle size using a pulverizer or a classifier.

Although it is preferable to use water as an aqueous dispersion medium for dispersing photocatalyst particles, there may alternatively be used a mixed solvent of water and a hydrophilic organic solvent that can be mixed with water at any ratio. Preferable examples of water include a purified water such as a filtrate water, a deionized water, a distilled water, or a pure water. Preferable examples of hydrophilic organic solvents include alcohols such as methanol, ethanol, and isopropanol; glycols such as ethylene glycol; and glycol ethers such as ethylene glycol monomethyl ether, ethylene glycol monoethyl ether, and propylene glycol-n-propyl ether. When a mixed solvent is used, it is preferred that a ratio of the hydrophilic organic solvent in the mixed solvent be larger than 0% by mass but not larger than 50% by mass; more preferably not larger than 20% by mass; even more preferably but not larger than 10% by mass.

There are no particular restrictions on mixing methods for dispersing the photocatalyst particles into the aqueous medium; there may be employed a stirring method using a stirrer, or a dispersion method using an ultrasonic disperser. The temperature at the time of performing mixing is set at 20 to 100°C, preferably at 20 to 80°C, and more preferably at 20 to 40°C, and it is preferred that the mixing period be 1 min to 3 hours. There are no particular restrictions on the concentration of the photocatalyst in the photocatalyst particle dispersion liquid, but it is preferred that the concentration be 0.0001 to 80% by mass, more preferably of 0.001 to 50% by mass, as the particles contained therein at a lower concentration generally tend to have more favorable dispersibility.

The resultant photocatalyst particle dispersion liquid may also contain a basic substance or an acidic substance for the purpose of pH adjustment or the like, and examples of such basic substance include alkali metal hydroxides such as sodium hydroxide and potassium hydroxide; alkali metal carbonates such as sodium carbonate and potassium carbonate; alkali metal hydrogen carbonates such as sodium hydrogen carbonate and potassium hydrogen carbonate; alkali metal alkoxides such as potassium tert-butoxide, sodium methoxide and sodium ethoxide; alkali metal salts of aliphatic hydrocarbons such as butyl lithium; and amines such as triethylamine, diethylaminoethanol and diethylamine. Examples of the acidic substance include inorganic acids such as aqua regia, hydrochloric acid, nitric acid and sulfuric acid; and organic acids such as formic acid, acetic acid, chloroacetic acid, dichloroacetic acid, oxalic acid, trifluoroacetic acid, and trichloroacetic acid. Further, an ion-exchange treatment or a filtration washing treatment may be performed to adjust ion component concentrations, or a solvent displacement treatment may be performed to change the solvent components. It is preferred that the photocatalyst particle dispersion liquid have a pH of 3 to 13, more preferably of 4 to 12. The mass of the photocatalyst particles contained in the photocatalyst particle dispersion liquid can be calculated from the mass and concentration of the photocatalyst particle dispersion liquid. Here, the method for measuring the concentration of the photocatalyst particle dispersion liquid is such that a part of the photocatalyst particle dispersion liquid is sampled, and the concentration is then calculated based on the mass of the non-volatile content (photocatalyst particles), after volatilizing the solvent by performing heating at 105°C for an hour, and the mass of the photocatalyst particle dispersion liquid sampled using the following formula: Concentration of photocatalyst particle dispersion liquid (%) = [Mass of non-volatile content (g)/Mass of photocatalyst particle dispersion liquid (g)] × 100.

### <Preparation of Silver Nanoparticle Dispersion Liquid>

### Step (2):

In Step (2), two types of solutions (2-1) and (2-2) are produced, where the solution (2-1) is a solution in which a raw material silver compound is dissolved in an aqueous dispersion medium and the solution (2-2) is a solution in which a reducing agent and a protective agent are dissolved in an aqueous dispersion medium. The reducing agent in the solution (2-2) serves to reduce the raw material silver compound in the solution (2-1). Further, the protective agent in the solution (2-2) serves to enhance dispersion stability in the aqueous dispersion medium by being adsorbed on the surface of the silver compound when the solutions (2-1) and (2-2) are subsequently mixed in Step (3) while the silver compound is reduced.

The manner of producing these solutions may be the one of adding the raw material silver compound and the reducing and protective agents separately into the respective aqueous dispersion mediums, and dissolving them by stirring. The stirring method is not particularly limited so long as it can dissolve the components uniformly in the aqueous dispersion medium, and any commercially available stirrer may be used therefor.

Various silver compounds may be used for the raw material silver compound, and examples of which include; inorganic acid salts of silver such as a silver salt of chloride, a silver salt of nitrate and a silver salt of sulfate; organic acid salts of silver such as a silver salt of formic acid, a silver salt of citric acid, a silver salt of oxalic acid, a silver salt of lactic acid and a silver salt of glycolic acid; and complex salts of silver such as an amine complex, a cyano complex, a halogeno complex, and a hydroxy complex of silvers. Any one of them may be used alone, or two or more of them may be used in combination. Particularly, it is preferable to use an inorganic acid salt of silver such as silver salt of chloride, silver salt of nitrate, or silver salt of sulfate.

The amount of the raw material silver compound contained therein is determined such that the solution (2-1) containing the raw material silver compound has an Ag concentration of 0.5 to 200 mmol/L, preferably of 5 to 100 mmol/L.

When the silver nanoparticles contain a non-silver metal component, it is preferable to further add a raw material compound of the non-silver metal component into the solution (2-1) containing the raw material silver compound and dissolve it.

Examples of such raw material compounds of the non-silver metal component include inorganic acid salts, such as chloride salts, nitrate salts, and sulfate salts, of, for example, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, and thorium; salts of organic acids, such as formic acid, citric acid, oxalic acid, lactic acid, and glycolic acid, with, for example, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, and thorium; and salts of complexes, such as ammine complexes, cyano complexes, halogeno complexes, and hydroxy complexes with, for example, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, and thorium.

The amount of the raw material compound of the non-silver metal component contained therein is determined such that the concentration of the element of the corresponding component is 0.01 to 40 mmol/L, preferably of 0.1 to 20 mmol/L.

An aqueous solvent is normally used for the aqueous dispersion medium in the solution (2-1) containing the raw material silver compound, and it is preferable to use water, a water-soluble organic solvent miscible with water, or a mixed solvent of water and a water-soluble organic solvent. Preferable examples of water include a deionized water, a distilled water, and a pure water. Further, examples of the water-soluble organic solvent include alcohols such as methanol, ethanol, n-propanol, 2-propanol, n-butanol, 2-butanol, tert-butanol, ethylene glycol, diethylene glycol, and polyethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether and propylene glycol-n-propyl ether; ketones such as acetone and methyl ethyl ketone; water-soluble nitrogen-containing compounds such as 2-pyrrolidone and N-methylpyrrolidone; and ethyl acetate. Any one of them may be used, or two or more of them may be used in combination. The amount of the aqueous dispersion medium in the medium in the solution (2-1) containing the raw material silver compound is a remainder of the contents of the raw material silver compound and non-silver components as explained above.

There are no particular restrictions on the types of reducing agent; there may be used any type of various reducing agents with the proviso that it is capable of reducing silver ions in the raw material silver compound. Examples of which include hydrazines such as hydrazine, hydrazine monohydrate, phenylhydrazine, and hydrazinium sulfate; amines such as dimethylaminoethanol, triethylamine, octylamine, dimethylaminoborane, and benzotriazole; organic acids such as oxalic acid, citric acid, ascorbic acid, tartaric acid, malic acid, malonic acid, and formic acid; polyphenols such as gallic acid, chlorogenic acid, catechin, cyanidin, epigallocatechin, delphinidin, tannic acid, and saponin; aldehydes such as formaldehyde, acetaldehyde, and glycolaldehyde; hydrides such as sodium borohydride, lithium borohydride, lithium triethylborohydride, lithium aluminum hydride, diisobutylaluminum hydride, tributyltin hydride, lithium tri(sec-butyl)borohydride, potassium tri(sec-butyl)borohydride, zinc borohydride, and sodium acetoxyborohydride; pyrrolidones such as polyvinylpyrrolidone (PVP), 1-vinylpyrrolidone, N-vinylpyrrolidone, and methylpyrrolidone; reducing sugars such as glucose, galactose, mannose, fructose, sucrose, maltose, raffinose, and stachyose; divalent iron compounds such as iron (II) sulfate, ferrous oxide (II), ammonium ferrous sulfate (II), ferrous chloride (II), ferrous perchlorate (II), ferrous oxalate (II), ferrous fumarate (II), and potassium hexacyanoferrate (II); and sugar alcohols such as sorbitol and their salts. Any one of them may be used or two or more of them may be used in combination. Of these, more preferred examples of them are hydrazines such as hydrazine monohydrate, salts of organic acid such as sodium citrate, polyphenols such as gallic acid and tannic acid, hydrides such as sodium borohydride, and aldehydes such as formaldehyde and glycolaldehyde because they have excellent capability of reducing silver ions, have small molecular weight, and can be readily filtered out in the process of washing the aqueous solvent of silver nanoparticles. Examples of the aqueous dispersion medium for dissolving the reducing agent include those same as the aqueous dispersion medium used for the above-mentioned metal compounds.

The amount of the reducing agent contained therein may be 0.001 to 50% by mass, preferably 0.01 to 40% by mass based on the total mass of the solution (2-2) containing the reducing and protective agents. This amount is based on the fact that the content of the reducing agent exceeding 50% by mass results in relatively small contents of the protective agent and the aqueous solvent, which prohibits the protective agent from being adsorbed in a sufficient amount on the surface of the silver nanoparticles, and potentially prevents the formation of silver nanoparticles having enhanced dispersion stability, and that the content of the reducing agent less than 0.001% by mass requires a large amount of solution containing the reducing and protective agents to be added into the solution containing the raw material silver compound and is therefore impractical.

There are no particular restrictions on the types of the protective agent; there may be used any type of various protective agents, with the proviso that it is capable of being adsorbed on the surface of the reduced raw material silver compound to enhance the dispersion stability in the aqueous dispersion medium. Specific examples of the protective agent include surfactants such as anionic surfactants, cationic surfactants, nonionic surfactants, and ampholytic surfactants; water-soluble polymer compounds such as PVP, polyethylene glycol, polyvinyl alcohol, polyethyleneimine, polyethylene oxide, polyacrylic acid, methylcellulose, and gelatin; amino acids such as cysteine, arginine, asparagine, and aspartic acid; aliphatic amine compounds such as ethanolamine, diethanolamine, triethanolamine, and propanolamine; polyphenols such as tannic acid, gallocatechin, gallic acid, pyrogallol, 4-benzylpyrogallol (2,3,4-trihydroxydiphenylmethane), and ellagitannin; primary amine compounds such as butylamine, dibutylamine, hexylamine, cyclohexylamine, heptylamine, 3-butoxypropylamine, octylamine, nonylamine, decylamine, dodecylamine, hexadecylamine, oleylamine, and octadecylamine; diamine compounds such as N,N-dimethylethylenediamine and N,N-diethylethylenediamine; silicic acid compounds such as silicate soda, water-soluble silicate, and colloidal silica; carboxylic acid compounds such as oleic acid and citric acid as well as their salts; and light stabilizers such as a hindered amine. Of these, more preferred examples of them are organic acid salts such as sodium citrate, polyphenols such as gallic acid and tannic acid, and carboxylic acid compounds such as sodium oleate because they have excellent stabilizing efficacy on silver nanoparticles, have small molecular weight, and can be readily filtered out in the process of washing the aqueous solvent of silver nanoparticles. One type of them may be used alone or two or more types of them may be used in combination. Although such combination is not particularly limited, it is preferable to use not only, for example, PVP or sodium citrate that is excellent in stabilizing efficacy on the silver nanoparticles but also to concurrently use silicate soda, gelatin, an aliphatic amine compound or a hindered amine as a protective agent because such use can enhance the durability. It is also preferable to use a surfactant or a polyphenol as a protective agent because such use can enhance antiviral efficacy.

It is preferred that the amount of the protective agent contained therein be 0.001 to 60% by mass, more preferably 0.01 to 50% by mass based on the total mass of the solution (2-2) containing the reducing and protective agents. This amount is based on the fact that the content of the protective agent exceeding 60% by mass results in relatively small contents of the reducing agent and the aqueous solvent, which not only reduces the yield of the silver nanoparticles but also necessitates a large amount of aqueous solvent in a subsequent process of washing the silver nanoparticle dispersion liquid with an aqueous solvent and is therefore impractical, and that the content of the protective agent less than 0.001% by mass prohibits the protective agent from being adsorbed in a sufficient amount on the surface of the silver nanoparticles, and potentially prevents the formation of silver nanoparticles having enhanced dispersion stability.

Preferable examples of the aqueous dispersion medium (aqueous solvent) of the solution (2-2), containing the reducing and protective agents, include water, a water-soluble organic solvent miscible with water, or a mixed solvent of water and a water-soluble organic solvent. Preferable examples of water include a deionized water, a distilled water, and a pure water. Further, examples of the water-soluble organic solvent include alcohols such as methanol, ethanol, isopropanol, n-propanol, 2-propanol, n-butanol, 2-butanol, tert-butanol, ethylene glycol, and diethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, and propylene glycol-n-propyl ether; ketones such as acetone and methyl ethyl ketone; water-soluble nitrogen-containing compounds such as 2-pyrrolidone and N-methylpyrrolidone; and ethyl acetate. Any one of them may be used, or two or more of them may be used in combination as the water-soluble organic solvent.
The amount of the aqueous solvent contained therein is 0.1 to 99.99% by mass, preferably 1.0 to 99.9% by mass, based on the total mass of the solution (2-2) containing the reducing and protective agents. This amount is based on the fact that the content of the aqueous solvent exceeding 99.99% by mass requires a large amount of the solution containing the reducing and protective agents to be added into the solution containing the raw material silver compound and is therefore impractical, and that the content of the aqueous solvent less than 0.1% by mass contribute little to the effects of improving the flowability of the solution containing the reducing and protective agents.

The above-listed basic substances or acidic substances may be added to the solution (2-2) containing the reducing and protective agents. Examples of the basic substances to be added to the solution (2-2) include the substances similar to those already listed above as the basic substances to be added to the photocatalyst particle dispersion liquid. Examples of the acidic substances to be added to the solution (2-2) include the substances similar to those already listed above as the acidic substances to be added to the photocatalyst particle dispersion liquid.

The content of the basic or acidic substance to be formulated therewith may be 0.0001 to 30% by mass, preferably 0.001 to 20% by mass based on the total mass of the solution (2-2) containing the reducing and protective agents. This amount is based on the fact that the content of the basic or acidic substance exceeding 30% by mass results in a relatively small content of the reducing agent or the protective agent, which potentially prevents the formation of silver nanoparticles having enhanced dispersion stability, and that the content of the basic or acidic substance less than 0.0001% by mass influence little to the pH of the solution containing the reducing and protective agents.

Although no particular restrictions will be imposed on the concentrations of these two solutions, there is a tendency that the lower these concentrations are, the smaller a primary particle diameter of each silver nanoparticle formed will become. That is, it is preferred that a preferable concentration range(s) be determined based on the target range of primary particle diameter.

The mixture of these two solutions may have any pH level with the proviso that it allows the reduction of silvers. The suitable pH range varies in accordance with the type of reducing agent to be used, but it is preferred that the pH levels of the mixture of these two solutions be adjusted to a pH within the range of 0 to 7 when, for example, a divalent iron compound is used as a reducing agent for allowing a reduction reaction to proceed in an acidic solution. A pH exceeding 7 is not preferable because such pH may cause the reduction reaction of silver to fail, while a pH of less than 0 is not preferable because such pH makes the subsequent filtration step necessitate enormous effort and reduces productivity. It is also preferred that the pH levels of the mixture of these two solutions be adjusted to a pH within the range of 7 to 16 when, for example, a hydrazine or polyphenol is used as a reducing agent for allowing a reduction reaction to proceed in a basic solution. A pH of less than 7 is not preferable because such pH may cause the reduction reaction of silver to fail, while a pH exceeding 15 is not preferable because such pH makes the subsequent filtration step necessitate enormous effort and reduces productivity.

### Step (3):

In the step (3), a solution in which the raw material silver compound is dissolved in the aqueous dispersion medium and a solution in which the reducing and protective agents are dissolved in an aqueous dispersion medium, having been prepared in the step (2), are mixed with each other to produce a silver nanoparticle dispersion liquid.

There are no particular restrictions on a method for mixing these two solutions, as long as the method employed allows the two solutions to be uniformly mixed together. For example, there may be employed a method where the silver nanoparticle compound solution and the solution of reducing and protective agents are put into a reaction container before being stirred and mixed together; a method where stirring and mixing is performed in a way such that the solution of the reducing and protective agents is delivered by drops thereinto while stirring the silver nanoparticle compound solution put in a reaction container; a method where stirring and mixing is performed in a way such that the silver nanoparticle compound is delivered by drops thereinto while stirring the solution of the reducing and protective agents put in a reaction container; a method where the silver nanoparticle compound solution and the solution of the reducing and protective agents are continuously supplied in constant amounts using, for example, a reaction container or a microreactor to perform the mixing.

There are no particular restrictions on a temperature at the time of performing mixing; it is preferred that the temperature be adjusted to a preferable temperature based on, for example, a target molar ratio of silver to the non-silver metal component in the silver nanoparticles, a target primary particle diameter, and a target reaction time.

### Step (4):

In the step (4), the silver nanoparticle dispersion liquid produced in the step (3) is washed with an aqueous dispersion medium by a membrane filtration method.

As the aqueous dispersion medium, it is preferred that there be used water, a water-soluble organic solvent miscible with water, or a mixed solvent of water and a water-soluble organic solvent. Preferable examples of water include, for example, a deionized water, a distilled water, and a pure water. Further, examples of the water-soluble organic solvent include alcohols such as methanol, ethanol, isopropanol, n-propanol, 2-propanol, n-butanol, 2-butanol, tert-butanol, ethylene glycol, and diethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, and propylene glycol-n-propyl ether; ketones such as acetone and methyl ethyl ketone; water-soluble nitrogen-containing compounds such as 2-pyrrolidone and N-methylpyrrolidone; and ethyl acetate. As the water-soluble organic solvent, any one of them may be used alone, or two or more of them may be used in combination.

A membrane filtration method is used to wash and separate, from the silver nanoparticle dispersion liquid, non-volatile impurities other than the silver nanoparticles, such as non-silver components in the raw material silver compound, a reducing agent, and a protective agent not adsorbed on the silver nanoparticles. It is preferred that washing be performed repeatedly until a mass ratio of the protective agent adsorbed on the surface of silver nanoparticles to the total mass of the metal components in the silver nanoparticles in the silver nanoparticle dispersion liquid has reached 0.01 to 10, more preferably 0.001 to 5, even more preferably 0.001 to 1. A mass ratio lower than 0.001 may reduce the dispersion stability of the silver nanoparticles, while a mass ratio exceeding 10 may prevent antiviral efficacy from sufficiently being exhibited because of the excessive amount of the protective agent adsorbed on the surface of silver nanoparticles.

### Determination of Metal Component Concentration in Silver Nanoparticle Dispersion Liquid (ICP-OES)

The metal component concentration in silver nanoparticle dispersion liquid can be measured by appropriately diluting the silver nanoparticle dispersion liquid with pure water, and then introducing the diluted liquid into an inductively coupled plasma optical emission spectrometer (Product name "Agilent 5110 ICP-OES" by Agilent Technologies, Inc.)

### Determination of Protective Agent adsorbed on the surface of Silver nanoparticles in Silver nanoparticle Dispersion Liquid

Here, the concentration of the protective agent adsorbed on the surface of silver nanoparticle in the silver nanoparticle dispersion liquid can be calculated by subtracting the metal component concentration determined by the above ICP-OES from a non-volatile content concentration that is calculated based on a mass of the non-volatile contents (Metal components + Protective agent adsorbed on the surface of silver nanoparticles), observed after the solvent has been volatilized as a result of heating part of the silver nanoparticle dispersion liquid as a sample at 105°C for three hours, and a mass of the sampled silver nanoparticle dispersion liquid. Concentration (ppm) of the protective agent adsorbed on the surface of silver nanoparticles = {Mass (g) of the non-volatile contents/Mass (g) of silver nanoparticle dispersion liquid} × 100 × 10000 - Metal component concentration (ppm) in silver nanoparticle dispersion liquid

The mass ratio of the protective agent adsorbed on the surface of silver nanoparticles to the silver can be calculated from the concentration of the protective agent adsorbed on the surface of the resultant silver nanoparticles as: Mass ratio of protective agent adsorbed on the surface of silver nanoparticles to the silver components = Concentration (ppm) of the protective agent adsorbed on the surface of silver nanoparticles/Metal component concentration (ppm) in silver nanoparticles

There are no particular restrictions on a membrane to be used in the membrane filtration method, as long as the membrane used is capable of separating the silver nanoparticles and the non-volatile impurities other than the silver nanoparticles from the silver nanoparticle dispersion liquid. Examples of such membrane include a microfiltration membrane, an ultrafiltration membrane, and a nanofiltration membrane. Among these membranes, filtration can be carried out using a membrane having a suitable pore size.

As a filtration method, there may also be employed any of, for example, centrifugal filtration, pressure filtration, and cross-flow filtration.

As for the shape of the filtration membrane, there may be appropriately employed any of, for example, a hollow-fiber type, a spiral type, a tubular type, and a flat membrane type.

There are no particular restrictions on the material of the filtration membrane, as long as the material employed has durability against the silver nanoparticle dispersion liquid. A material that is appropriately selected from, for example, organic films such as those made of polyethylene, tetrafluoroethylene, polypropylene, cellulose acetate, polyacrylonitrile, polyimide, polysulfone, and polyether sulfone; and inorganic films such as those made of silica, alumina, zirconia, and titania may be used.

Specific examples of the abovementioned filtration membrane include microza (by Asahi Kasei Chemicals Corporation), Amicon Ultra (by Merck Millipore Corporation), MOLSEP (DAICEN MEMBRANE-SYSTEMS Ltd.), Ultra filter (by Advantec Toyo Kaisha, Ltd.) and MEMBRALOX (by Nihon Pall Ltd.).

### <Preparation of photocatalyst-silver nanoparticle dispersion liquid >

### Step (5):

In the step (5), the photocatalyst particle dispersion liquid obtained in the step (1) and the silver nanoparticle dispersion liquid obtained in the step (4) are mixed to produce a photocatalyst-silver nanoparticle dispersion liquid. There are no particular restrictions on a mixing method, as long as the method employed allows the two kinds of dispersion liquids to be uniformly mixed together; for example, the mixing may be carried out by performing stirring using a commonly available stirrer.

A mixing ratio between the photocatalyst particle dispersion liquid and silver nanoparticle dispersion liquid is determined such that the particle mass ratio of the photocatalyst particles to the silver nanoparticles in the respective dispersion liquids (photocatalyst particles/silver nanoparticles) is 1 to 100,000, preferably 10 to 10,000, even more preferably 20 to 1,000. It is not preferable when the mass ratio is lower than 1, because the photocatalytic property will not be fully exhibited; it is also not preferable when the mass ratio is greater than 100,000, because the antiviral capability in a dark place will not be fully exhibited.

### <Preparation of photocatalyst-silver nanoparticle-binder dispersion liquid >

### Step (6):

In the step (6), a binder is mixed into the photocatalyst-silver nanoparticle dispersion liquid ptpduced in the step (5) for the sake of further enhancing antiviral efficacy to be brought by light irradiation, allowing the photocatalyst-silver nanoparticle dispersion liquid to be easily applied onto the surface of various types of members to be explained below, and allowing the particles to be readily adhered thereto, thus obtaining a photocatalyst-silver nanoparticle-binder dispersion liquid. There are no particular restrictions on the mixing methods, as long as the method employed allows uniform mixing; for example, the mixing may be carried out by performing stirring using a commonly available stirrer.

The binder to be mixed therewith is mixed preferably at ratios with the proviso that it satisfies both of the mass ratio of the photocatalyst particles to the binder component and the mass ratio of the silver nanoparticles to the binder component as shown below.

The mixing ratio of the photocatalyst particle dispersion liquid to the binder is determined such that the mass ratio of the photocatalyst particles to the binder component (photocatalyst particles/binder) is 0.01 to 50, preferably 0.05 to 30, even more preferably 0.1 to 10. It is not preferable when the mass ratio is lower than 0.01, because the photocatalytic property might not be fully exhibited; it is also not preferable when the mass ratio is greater than 50, because the antiviral efficacy enhancement brought by light irradiation might not be observed.

The mixing ratio of the silver nanoparticle dispersion liquid to the binder is determined such that the mass ratio of the silver nanoparticles to the binder component (silver nanoparticles/binder) is 0.00001 to 10, preferably 0.0001 to 1, even more preferably 0.001 to 0.5. It is not preferable when the mass ratio is lower than 0.00001, because the antiviral efficacy in a dark place may be decreased; it is also not preferable when the mass ratio is greater than 10, because the antiviral efficacy enhancement brought by light irradiation might not be observed.

### <Member>

The photocatalyst-silver nanoparticle dispersion liquid can be used to form the antiviral composition on the surfaces of various types of members. Here, there are no particular restrictions on the types of such members; examples of the materials in such member include organic materials and inorganic materials. These members may have various shapes depending on their purposes and intended uses.

Examples of the organic materials include synthetic resin materials such as a polyvinyl chloride resin (PVC), polyethylene (PE), polypropylene (PP), polycarbonate (PC), an acrylic resin, polyacetal, a fluorocarbon resin, a silicone resin, an ethylene-vinyl acetate copolymer (EVA), acrylonitrile-butadiene rubber (NBR), polyethylene terephthalate (PET), polyethylene naphthalate (PEN), polyvinyl butyral (PVB), an ethylene-vinyl alcohol copolymer (EVOH), a polyimide resin, polyphenylene sulfide (PPS), polyetherimide (PEI), polyether ether imide (PEEI), polyether ether ketone (PEEK), a melamine resin, a phenolic resin, and an acrylonitrile-butadiene-styrene (ABS) resin; natural materials such as natural rubbers; and semisynthetic materials of these synthetic resin materials with natural materials. These materials may already be processed into particular shapes and structures such as those of films, sheets, fiber materials, fiber products, or other molded products as well as laminated bodies.

Examples of the inorganic materials include non-metallic inorganic materials and metallic inorganic materials. Examples of the non-metallic inorganic materials include glass, ceramics, and stone materials. They may already be processed into various shapes such as those of tiles, glass products, mirrors, walls and design materials. Examples of the metallic inorganic materials include cast iron, steel, iron, iron alloys, aluminum, aluminum alloys, nickel, nickel alloys, and zinc die-cast. They may already be plated with the above metallic inorganic materials or coated with the above organic materials, or even be used to plate the surfaces of the above organic materials or non-metallic inorganic materials.

As a method for forming photocatalyst-silver nanoparticle composition on the surfaces of the various members, the photocatalyst-silver nanoparticle dispersion liquid may, for example, be applied to the surface of an above-listed member by a known application method such as spray coating and dip coating, followed by performing drying by a known drying method such as far-infrared drying, IH drying, and hot-air drying. The thickness of the dried and solidified photocatalyst-silver nanoparticle composition may be determined variously; it is preferred that the thickness of the composition normally fall into a range of 10 nm to 10 µm. The above-explained method allows the photocatalyst-silver nanoparticle composition to be formed on the surface of the member.

The photocatalyst-silver nanoparticle composition formed in this way on the surface of a member exhibits antiviral activities in a dark place, and provides antiviral activities that is further enhanced by light irradiation, and therefore various types of members having the photocatalyst-silver nanoparticle composition formed on their surfaces are allowed to exhibit antiviral efficacy on their surface.

### Examples

The present invention will be specifically described below with reference to working and comparative examples, but the present invention shall not be limited to the following working examples.

The antiviral activity as used herein was measured as follows. Measurements other than the antiviral activity were performed by the above-mentioned methods unless otherwise specified below.

Antiviral activity was calculated based on JIS R1756:2020 "Fine ceramics (advanced ceramics, advanced technical ceramics)- Determination of antiviral activity of photocatalytic materials under indoor lighting environment-Test method using bacteriophage Q-beta" to evaluate the antiviral activity of the composition using the criteria to be explained below. A glass piece (hereafter also referred to as test piece) of 50 mm × 50 mm × 2 mm was used as a member on which the composition was formed

### <Antiviral Activity Measurement based on JIS R1756:2020>

A glass rod was placed in a moisturized petri dish, and a test piece was placed on top of the glass rod. 200 µL of bacteriophage solution was placed on the test piece, and the bacteriophage solution was covered with a covering film, and then the petri dish was covered with a moisturizing glass. The prepared petri dish was left to stand for 4 hours in a dark place (0 lx) or a bright place (500 lx of visible light from a white fluorescent lamp with wavelengths of 380 nm or less cut off). A digital illumination meter LX-105 (manufactured by CUSTOM corporation) was used to measure the illuminance. After being left to stand, the test piece and the covering film were transferred to a sterilized stomacher bag, washed out with 5 mL of physiological saline containing a surfactant, and the bacteriophage solution was collected. The collected bacteriophage solution was diluted, and 100 µL each of the solution and Escherichia coli solution were mixed into which a soft agar medium was further mixed, and then the mixture was plated on the medium. The number of killed coliform bacteria (plaques) was counted after being incubated at 37°C overnight to determine the infectious titer of the virus.

The antiviral activity value based on JIS R1756:2020 is a value obtained by performing the above-explained operation using a test piece treated with antiviral treatment and a plain test piece as a difference in the average values of the common logarithm of the two infectious titers. Antiviral activity value (-) of a test piece treated with antiviral treatment in a dark place = log 10 (Virus infection titer (-) of the test piece treated with antiviral treatment after being left to stand for 4 hours in a dark place) - log 10 (Virus infection titer (-) of the plain test piece after being left to stand for 4 hours in a dark place) Antiviral activity value (-) of a test piece treated with antiviral treatment in a bright place = log 10 (Virus infection titer (-) of the test piece treated with antiviral treatment after being left to stand for 4 hours in a bright place) - log 10 (Virus infection titer (-) of the plain test piece after being left to stand for 4 hours in a bright place).

The efficacy brought by light irradiation was calculated from the antiviral activity values in the dark and bright places and was evaluated using a criterion defined by:
Efficacy brought by light irradiation (Antiviral activity value brought by light irradiation) = Antiviral activity value of a test piece treated with antiviral treatment in a bright place - Antiviral activity value of the test piece treated with antiviral treatment in a dark place
- Antiviral efficacy in a dark place was evaluated as High (hereunder denoted as ⊚) when the antiviral activity value in the dark place was 2.0 or higher.
- Antiviral efficacy in a dark place was evaluated as Moderate (hereunder denoted as ∘) when the antiviral activity value in the dark place was from 1.0 to less than 2.0.
- Antiviral efficacy in a dark place was evaluated as Low (hereunder denoted as ×) when the antiviral activity value in the dark place was less than 1.0.
- Photocatalytic function was evaluated as High (hereunder denoted as ⊚) when the efficacy brought by light irradiation was 0.6 or higher.
- Photocatalytic function was evaluated as Moderate (hereunder denoted as ∘) when the efficacy brought by light irradiation was from 0.3 to less than 0.6.
- Photocatalytic function was evaluated as Low (hereunder denoted as △) when the efficacy brought by light irradiation was more than 0 and less than 0.3.
- Photocatalytic function was evaluated as Non-existent (hereunder denoted as ×) when the efficacy brought by light irradiation was 0 or less.

### [Preparation Example 1-1]

### <Preparation of rutile-type titanium oxide dispersion liquid>

As a photocatalyst material, commercially available MPT-623 (rutile-type titanium oxide manufactured by ISHIHARA SANGYO KAISHA, LTD.) was dispersed in pure water, and the dispersion was used as a photocatalyst dispersion liquid (1A) (titanium oxide concentration of 1.2% by mass).

The photocatalyst particles in the resultant photocatalyst dispersion liquid were observed by the above-mentioned method using a transmission electron microscope, and it was confirmed that the primary particle diameter was 18 nm. The results of the photocatalyst dispersion liquids obtained in Preparation Examples 1-1 to 1-3 are summarized in Table 1 below.

### [Preparation Example 1-2]

### <Preparation of anatase-type titanium oxide dispersion liquid: Titanium oxide synthesis by liquid phase method>

A 36% by mass of titanium chloride (IV) aqueous solution was diluted by 10 times with pure water to which 10% by mass of ammonia water was then gradually added for the purpose of neutralization and hydrolyzation to obtain a precipitate of titanium hydroxide. The pH at that time was 8.5. The precipitate thus obtained was then deionized by repeating the addition of pure water and decantation. A 35% by mass of hydrogen peroxide water was then added to this deionized precipitate of titanium hydroxide so that H₂O₂/(Ti) (molar ratio) would be 8, followed by performing stirring at 60°C for two hours so as to sufficiently react the solution, thereby obtaining an orange transparent peroxotitanic acid solution (2a).

Next, 400 mL of the peroxotitanic acid solution (2a) was put into a 500 mL volume autoclave so as to be subjected to a hydrothermal treatment at 130°C for 90 min, followed by adding pure water to adjust the concentration thereof, thereby obtaining a dispersion liquid of titanium oxide particles (2A) (titanium oxide concentration of 1.2% by mass).

### [Preparation Example 1-3]

### <Preparation of tungsten oxide dispersion liquid>

As a photocatalyst material, commercially available tungsten trioxide nanoparticles of 99.95% orthorhombic crystal (manufactured by EM Japan Co., Ltd.) were dispersed into pure water and the dispersion was used as a photocatalyst dispersion liquid (3A) (tungsten oxide concentration of 1.2% by mass).

### [Preparation Example 2-1]

### <Preparation of silver nanoparticle dispersion liquid protected by sodium citrate>

Pure water was used as the solvent, and silver nitrate was dissolved thereinto so that the Ag concentration was 65.0 mmol/L to obtain a solution (I) containing the raw material silver compound.

98.5% by mass of pure water as a solvent, 0.5% by mass of ferrous sulfate as a reducing agent, and 1.0% by mass of trisodium citrate dihydrate as a reducing/protective agent were mixed with each other to obtain a solution (i) containing the reducing and protective agents.

1500 mL of the solution (i) containing the reducing and protective agents at 25°C was mixed into 300 mL of the solution (I) containing the raw material silver compound at 25°C in a reactor to obtain a liquid (pH = 4.6), which was concentrated with the aid of an ultrafiltration membrane (MOLSEP by DAICEN MEMBRANE-SYSTEMS Ltd.) having a molecular weight cut-off of 50,000 and washed with pure water, thereby obtaining a silver nanoparticle dispersion liquid (α). A tabletop pH Analyzer F-71 (manufactured by HORIBA Advanced Techno, Co., Ltd.) was used for the measurement of pH.

The metal concentration of the obtained silver nanoparticle dispersion liquid was measured by ICP-OES (Agilent Technologies, Inc.), and the mass ratio of the protective agent to the metal component was calculated from the non-volatile content concentration and the metal concentration. Further, the silver nanoparticle dispersion liquid was diluted to a predetermined concentration to measure the dispersed particle diameter with the aid of ELSZ-2000ZS (by Otsuka Electronics Co., Ltd.). Furthermore, in a manner similar to the photocatalyst particles, a transmission electron microscope (H-9500 manufactured by Hitachi High-Technologies Corporation) was used to take images of the resultant silver nanoparticle dispersion liquid from which projected area equivalent circle diameters (Heywood diameter) of approximately 1,000 non-overlapping particles randomly selected from multiple particle images were measured to calculate the primary particle diameter of the silver nanoparticles based on the arithmetic mean value of the projected area equivalent circle diameters. The compositions and physical properties of the silver nanoparticle dispersion liquids obtained in Preparation Examples 2-1 to 2-6 are summarized in Table 2 below.

### [Preparation Example 2-2]

### <Preparation of silver nanoparticle dispersion liquid protected by tannic acid>

Pure water was used as the solvent, and silver nitrate was dissolved thereinto so that the Ag concentration was 6.0 mmol/L to obtain a solution (II) containing the raw material silver compound.

94.3% by mass of pure water, 1.9% by mass of tannic acid as a reducing/protective agent, and 3.8% by mass of potassium hydroxide as a basic substance were mixed with each other to obtain a solution (ii) containing the reducing and protective agents.

100 mL of the solution (ii) containing the reducing and protective agents at 60°C was mixed into 1000 mL of the solution (II) containing the raw material silver compound at 90°C in a reactor to obtain a liquid (pH = 12.6), which was concentrated and washed in the same manner as in Preparation Example 2-1, thereby obtaining a silver nanoparticle dispersion liquid (β).

### [Preparation Example 2-3]

### <Preparation of silver iron nanoparticle dispersion liquid protected by tannic acid and sodium oleate>

Silver nitrate and iron (III) nitrate nonahydrate were dissolved into pure water so that the Ag concentration was 6.0 mmol/L and Fe concentration was 1.1 mmol/L to obtain a solution (III) containing the raw material silver compound.

92.4% by mass of pure water as a solvent, 1.9% by mass of tannic acid as a reducing/protective agent, 1.9% by mass of sodium oleate as a protective agent, and 3.8% by mass of potassium hydroxide as a basic substance were mixed with each other for preparation to obtain a solution (iii) containing the reducing and protective agents.

A silver iron nanoparticle dispersion liquid (γ) was obtained in the same manner as in Preparation Example 2-2 except that the solution (III) containing the raw material silver compound was used in place of the solution (II) containing the raw material silver compound, and that the solution (iii) containing the reducing and protective agents was used in place of the solution (ii) containing the reducing and protective agents. The solution before being concentrated by the ultrafiltration membrane and washed with pure water had a pH of 12.7. In addition, the content of silver component with respect to the mass of the metal components of the silver iron nanoparticles in the silver iron nanoparticle dispersion liquid (γ) was 90% by mass while the iron content thereof was 10% by mass.

### [Preparation Example 2-4]

### <Preparation of silver palladium nanoparticle dispersion liquid protected by polyvinylpyrrolidone>

Silver nitrate and palladium nitrate dihydrate were dissolved into pure water so that the Ag concentration was 6.0 mmol/L and Pd concentration was 0.1 mmol/L to obtain a solution (IV) containing the raw material silver compound.

55% by mass of ethylene glycol and 8% by mass of pure water as solvents, 2% by mass of potassium hydroxide as a basic substance, 20% by mass of hydrazine monohydrate as a reducing agent, 5% by mass of dimethylaminoethanol, and 10% by mass of polyvinylpyrrolidone K30 (PVP manufactured by FUJIFILM Wako Pure Chemical Corporation) as a reducing/protective agent, were mixed with each other to obtain a solution (iv) containing the reducing and protective agents.

A silver palladium nanoparticle dispersion liquid (δ) was obtained in the same manner as in Preparation Example 2-2 except that the solution (IV) containing the raw material silver compound was used in place of the solution (II) containing the raw material silver compound, and that the solution (iv) containing the reducing and protective agents was used in place of the solution (ii) containing the reducing and protective agents. The solution before being concentrated by the ultrafiltration membrane and washed with pure water had a pH of 13.2. In addition, the content of silver component with respect to the mass of the metal components of the silver palladium nanoparticles in the silver palladium nanoparticle dispersion liquid (δ) was 98% by mass while the palladium content thereof was 2% by mass.

### [Preparation Example 2-5]

A silver palladium nanoparticle dispersion liquid (ε) was obtained in the same manner as in Preparation Example 2-4 except that the solution containing the raw material silver compound had a temperature set at 25°C and that the solution containing the reducing and protective agents had a temperature set at 25°C. The solution before being concentrated by the ultrafiltration membrane and washed with pure water had a pH of 13.2.

### [Preparation Example 2-6]

### <Preparation of coarse silver particle dispersion liquid>

55% by mass of ethylene glycol and 18% by mass of pure water as solvents, 2% by mass of potassium hydroxide as a basic substance, 20% by mass of hydrazine monohydrate as a reducing agent, and 5% by mass of dimethylaminoethanol were mixed with each other to obtain a solution (v) containing the reducing agent.

A silver particle dispersion liquid (ζ) was obtained in the same manner as in Preparation Example 2-2 except that the solution (v) containing the reducing agent was used in place of the solution (ii) containing the reducing and protective agents. The solution before being concentrated by the ultrafiltration membrane and washed with pure water had a pH of 13.2.

The compositions of the dispersion liquids of the following working and comparative examples are summarized in Table 3, and the results of the antiviral evaluation of the compositions of the working and comparative examples are as summarized in Table 4.

### [Working Example 1]

The photocatalyst particle dispersion liquid (1A) and the silver nanoparticle dispersion liquid (α) were mixed with each other so that the photocatalyst component was 4,200 ppm and the silver component was 33 ppm, on a mass basis, to obtain a photocatalyst- silver nanoparticle dispersion liquid (a).

The photocatalyst-silver nanoparticle dispersion liquid was applied to a glass base plate so as to be 10 g/m², and then dried to form a photocatalyst-silver nanoparticle composition (A) on the glass base plate, and the antiviral properties were measured.

### [Working Example 2]

A photocatalyst-silver nanoparticle composition (B) was prepared in the same manner as in Working Example 1 except that the photocatalyst particle dispersion liquid (2A) and the silver nanoparticle **dispersion liquid (β) were mixed with each other** so that the photocatalyst component was 2,400 ppm and the silver component was 33 ppm to obtain a photocatalyst-silver nanoparticle dispersion liquid (b), and the antiviral properties of the composition were measured.

### [Working Example 3]

A photocatalyst-silver nanoparticle composition (C) was prepared in the same manner as in Working Example 1 except that the photocatalyst particle dispersion liquid (3A) and the silver nanoparticle dispersion liquid (γ) were mixed with each other so that the photocatalyst component was 4,200 ppm and the silver component was 13 ppm to obtain a photocatalyst-silver nanoparticle dispersion liquid (c), and the antiviral properties of the composition were measured.

### [Working Example 4]

A photocatalyst-silver nanoparticle composition (D) was prepared in the same manner as in Working Example 1 except that the photocatalyst particle dispersion liquid (1A) and the **silver nanoparticle dispersion liquid (δ) were mixed** with each other so that the photocatalyst component was 4,200 ppm and the silver component was 13 ppm to obtain a photocatalyst-silver nanoparticle dispersion liquid (d), and the antiviral properties of the composition were measured.

### [Working Example 5]

A photocatalyst-silver nanoparticle composition (E) was prepared in the same manner as in Working Example 1 except that the photocatalyst particle dispersion liquid (1A) and the **silver nanoparticle dispersion liquid (ε) were mixed** with each other so that the photocatalyst component was 7,000 ppm, the silver component was 33 ppm and the binder concentration was 4,200 ppm to obtain a photocatalyst-silver nanoparticle dispersion liquid (e), and the antiviral properties of the composition were measured.

### [Working Example 6]

A photocatalyst-silver nanoparticle-binder composition (F) was prepared in the same manner as in Working Example 1 except that the photocatalyst particle dispersion liquid (1A), **the silver nanoparticle dispersion liquid (α),** and a colloidal silica (Product name: SNOWTEX 20 manufactured by Nissan Chemical Corporation) were mixed with each other so that the photocatalyst component was 4,200 ppm, the silver component was 33 ppm and the binder concentration was 4,200 ppm to obtain a photocatalyst-silver nanoparticle-binder dispersion liquid (f), and the antiviral properties of the composition were measured.

### [Working Example 7]

A photocatalyst-silver nanoparticle-binder composition (G) was prepared in the same manner as in Working Example 1 except that the photocatalyst particle dispersion liquid (1A), **the silver nanoparticle dispersion liquid (α), and a silicate solution** (Trade name: Scutum S manufactured by Shin-Etsu Chemical Co., Ltd) were mixed with each other so that the photocatalyst component was 4,200 ppm, the silver component was 33 ppm and the binder concentration was 6,200 ppm to obtain a photocatalyst-silver nanoparticle-binder dispersion liquid (g), and the antiviral properties of the composition were measured.

### [Working Example 8]

A photocatalyst-silver nanoparticle-binder composition (H) was prepared in the same manner as in Working Example 1 except that the photocatalyst particle dispersion liquid (1A), **the silver nanoparticle dispersion liquid (α), and sodium silicate** JIS No.3 (manufactured by FUJI CHEMICAL Co., Ltd), adjusted so that the solution has a pH of 4.0 using a cation exchanger resin (Trade name: AMBERLITE HPR1024 H manufactured by ORGANO CORPORATION), were mixed with each other so that the photocatalyst component was 4,200 ppm, the silver component was 33 ppm and the binder concentration was 2,200 ppm to obtain a photocatalyst-silver nanoparticle-binder dispersion liquid (h), and the antiviral properties of the composition were measured.

### [Comparative Example 1]

A photocatalyst-silver nanoparticle composition (I) was prepared in the same manner as in Working Example 1 except that the photocatalyst particle dispersion liquid (1A) and the silver particle dispersion liquid **(ζ) were mixed with each other so that the photocatalyst** component was 4,200 ppm and the silver component was 33 ppm to obtain a photocatalyst-silver particle dispersion liquid (i) and the antiviral properties of the composition were measured.

### [Comparative Example 2]

A photocatalyst-silver particle-binder composition (J) was prepared in the same manner as in Working Example 1 except that the photocatalyst particle dispersion liquid (1A), **the silver particle dispersion liquid (ζ),** and a colloidal silica (Product name: SNOWTEX 20 manufactured by Nissan Chemical Corporation) were mixed with each other so that the photocatalyst component was 4,200 ppm, the silver component was 33 ppm to obtain a photocatalyst-silver particle-binder dispersion liquid (j) and the binder concentration was 4,200 ppm, and the antiviral properties of the composition were measured.

### [Comparative Example 3]

A photocatalyst composition (K) was prepared in the same manner as in Working Example 1 except that the photocatalyst particle dispersion liquid (1A) was diluted with pure water to have the photocatalyst component content of 4200 ppm to obtain a photocatalyst dispersion liquid (k), and the antiviral properties of the composition were measured.

### [Comparative Example 4]

A photocatalyst-binder composition (L) was prepared in the same manner as in Working Example 1 except that the photocatalyst particle dispersion liquid (1A) and a silicate solution (Trade name: Scutum S manufactured by Shin-Etsu Chemical Co., Ltd) were mixed with each other so that the photocatalyst component was 4,200 ppm and the binder concentration was 4,200 ppm to obtain a photocatalyst-binder dispersion liquid (l), and the antiviral properties of the composition were measured.

### [Comparative Example 5]

A silver nanoparticle composition (M) was prepared in the same manner as in Working Example 1 except that the silver nanoparticle dispersion liquid **(α) was mixed to have** a silver component of 33 ppm to obtain a silver nanoparticle dispersion liquid (m), and the antiviral properties of the composition were measured.

**[Table 1]**

| **Preparation example** | **Photocatalyst particle dispersion liquid** | **Photocatalyst material** | **Primary particle dimeter [nm]** |
|---|---|---|---|
| 1-1 | 1A | Rutile-type titanium oxide | 18 |
| 1-2 | 2A | Anatase-type titanium oxide | 15 |
| 1-3 | 3A | Tungsten oxide | 20 |

**[Table 2]**

| **Preparation example** | **Silver nanoparticle dispersion liquid** | **Metal species** | **Protective agent** | **Protective agent/Metal components in silver nanoparticles (Mass ratio)** | **Dispersed particle diameter [nm]** | **Primary particle diameter [nm]** |
|---|---|---|---|---|---|---|
| 2-1 | α | Ag | Trisodium citrate dihydrate | 0.03 | 3.6 | 3 |
| 2-2 | β | Ag | Tannic acid | 0.98 | 7.5 | 6 |
| 2-3 | γ | AgFe | Tannic acid Sodium oleate | 0.47 | 15 | 11 |
| 2-4 | δ | AgPd | PVP | 6.26 | 69 | 31 |
| 2-5 | ε | AgPd | PVP | 8.21 | 180 | 92 |
| 2-6 | ζ | Ag | - | 0 | >1000 | 112 |

**[Table 3]**

| **Working example / Comparative example** | **Photocatalyst -silver nanoparticle -binder composition** | **Photocatalyst dispersion liquid** | **Silver nanoparticle dispersion liquid** | **Photocatalyst concentration [ppm]** | **Silver concentration [ppm]** | **Binder concentration [ppm]** |
|---|---|---|---|---|---|---|
| Working example 1 | a | 1A | α | 4200 | 33 | 0 |
| Working example 2 | b | 2A | β | 2400 | 33 | 0 |
| Working example 3 | c | 3A | γ | 4200 | 13 | 0 |
| Working example 4 | d | 1A | δ | 4200 | 33 | 0 |
| Working example 5 | e | 1A | ε | 7000 | 33 | 0 |
| Working example 6 | f | 1A | α | 4200 | 33 | 4200 |
| Working example 7 | g | 1A | α | 4200 | 33 | 6200 |
| Working example 8 | h | 1A | α | 4200 | 33 | 2200 |
| Comparative example 1 | i | 1A | ζ | 4200 | 33 | 0 |
| Comparative example 2 | j | 1A | ζ | 4200 | 33 | 4200 |
| Comparative example 3 | k | 1A | - | 4200 | 0 | 0 |
| Comparative example 4 | 1 | 1A | - | 4200 | 0 | 4200 |
| Comparative example 5 | m | - | α | 0 | 33 | 0 |

**[Table 4]**

| **Working example / Comparative example** | **Photocatalyst -silver nanoparticle -binder composition** | **Antiviral activity value [-]** | | **Efficacy brought by light irradiation** | **Evaluation on antiviral activity value in dark place** | **Evaluation on Efficacy brought by light irradiation** |
|---|---|---|---|---|---|---|
| | | **Dark place** | **Bright place** | | | |
| Working example 1 | A | 2.3 | 2.7 | 0.4 | ⊚ | ○ |
| Working example 2 | B | 2.4 | 2.7 | 0.3 | ⊚ | ○ |
| Working example 3 | C | 2.2 | 2.5 | 0.3 | ⊚ | ○ |
| Working example 4 | D | 1.6 | 1.9 | 0.3 | ○ | ○ |
| Working example 5 | E | 1.3 | 1.6 | 0.3 | ○ | ○ |
| Working example 6 | F | 2.1 | 3.7 | 1.6 | ⊚ | ⊚ |
| Working example 7 | G | 2.2 | 4.0 | 1.8 | ⊚ | ⊚ |
| Working example 8 | H | 2.1 | 3.4 | 1.3 | ⊚ | ⊚ |
| Comparative example 1 | I | 1.2 | 1.3 | 0.1 | ○ | △ |
| Comparative example 2 | J | 0.9 | 0.9 | 0.0 | × | × |
| Comparative example 3 | K | 0.1 | 1.1 | 1.0 | × | ⊚ |
| Comparative example 4 | L | 0.0 | 0.5 | 0.5 | × | ○ |
| Comparative example 5 | M | 2.1 | 2.2 | 0.1 | ⊚ | △ |

As shown from the results of the working examples 1 to 8, the antiviral composition of the present invention containing photocatalyst particles and silver nanoparticles having a dispersed particle diameter of 1000 nm or less and a primary particle diameter of 500 nm or less exhibited an antiviral activity value greater than 1.0 (90% of the viruses were inactivated) in a dark place while the composition exhibited an efficacy brought by light irradiation of greater than 0.3, showing antiviral efficacy of the composition and enhancement in antiviral activity by light irradiation. In particular, the antiviral activity values in a dark place of the working examples 6 to 8 exhibited antiviral activity values of 2.0 or more (about 99% of the viruses were inactivated) in a dark place, thus showing high levels of antiviral efficacy of the compositions in a dark place.

As shown from the results of the working examples 6 to 8, the compositions further containing binder components exhibited enhanced antiviral efficacies by light irradiation while maintaining high levels of antiviral activities of the compositions in a dark place, demonstrating a feature that had been unimaginable in a conventional photocatalyst composition.

As shown from the results of the comparative examples 1 and 2, although the compositions containing coarse silver particles exhibited antiviral activities in a dark place, the efficacies brought by light irradiation of the comparative examples 3 and 4 containing the photocatalyst alone, were rather superior to the comparative examples 1 and 2, thus demonstrating that the coarse silver particles inhibited the photocatalytic function. Furthermore, the addition of a binder reduced the antiviral activity in a dark place and the efficacy brought by light irradiation.

As shown from the results of the comparative examples 3 to 5, the photocatalysts alone exhibited low antiviral activities in a dark place and silver nanoparticles alone exhibited reduced efficacy brought by light irradiation. Further, the antiviral activity in a dark place and the efficacy brought by light irradiation were both reduced when a binder was added thereinto.

## Claims

1. An antiviral composition comprising two types of particles of:
i) photocatalyst particles; and
ii) silver nanoparticles having a protection agent adsorbed on the surface thereof and having a dispersed particle diameter of 1000 nm or less and a primary particle diameter of 500 nm or less,
wherein the composition exhibits an antiviral activity value greater than 0.3 based on JIS R1756:2020 in a dark place, while the composition exhibits an antiviral activity value brought by light irradiation of 0.3 or more based on JIS R1756:2020.

2. The antiviral composition according to claim 1, further comprising a binder.

3. The antiviral composition according to claim 1 or 2, wherein an amount by mass of the protection agent to the amount by mass of metal components in the silver nanoparticles ii) is in a range from 0.001 to 10.

4. A member comprising the antiviral composition according to claim 3 on a surface of the member.

5. The antiviral composition according to claim 1 or 2, further comprising an aqueous dispersion medium.
